(19) Europäisches Patentamt
European Patent Office
Office européen des brevets

(11) **EP 3 479 071 B1**

(12) **EUROPÄISCHE PATENTSCHRIFT**

(45) Veröffentlichungstag und Bekanntmachung des Hinweises auf die Patenterteilung:
**25.03.2020 Patentblatt 2020/13**

(21) Anmeldenummer: **17757466.2**

(22) Anmeldetag: **29.06.2017**

(51) Int Cl.:
*G01D 5/20* *(2006.01)*     *G01B 7/30* *(2006.01)*

(86) Internationale Anmeldenummer:
**PCT/EP2017/066149**

(87) Internationale Veröffentlichungsnummer:
**WO 2018/002231 (04.01.2018 Gazette 2018/01)**

(54) **DREHWINKELSENSOR, STATORELEMENT SOWIE ROTORELEMENT FÜR DIESEN**

ANGLE POSITION SENSOR, STATOR ELEMENT AND ROTORELEMENT THEREFOR

CAPTEUR D'ANGLE, ÉLÉMENT STATORIQUE ET ÉLÉMENT ROTORIQUE POUR CECI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.06.2016 DE 102016211832**

(43) Veröffentlichungstag der Anmeldung:
**08.05.2019 Patentblatt 2019/19**

(73) Patentinhaber: **Robert Bosch GmbH**
**70442 Stuttgart (DE)**

(72) Erfinder:
• **UTERMOEHLEN, Fabian**
**71229 Leonberg (DE)**
• **MERZ, Andreas**
**71691 Freiberg Am Neckar (DE)**

(56) Entgegenhaltungen:
**EP-A2- 0 292 426     DE-A1- 2 622 048**

**Beschreibung**

Stand der Technik

Die Erfindung betrifft einen Drehwinkelsensor.

Durch Anordnen von Sende- und Empfangsspulen am Stator eines Drehwinkelsensors, die mit einem Target am Rotor induktiv derart gekoppelt sind, dass bei Aussenden eines elektromagnetischen Wechselfeldes durch die Sendespule in der Empfangsspule eine Wechselspannung induziert wird, kann der Drehwinkel abhängig von der induzierten Wechselspannung erfasst werden. Dies ist beispielsweise in der EP 0 909 955 B1 beschrieben.

Aus der DE 26 22 048 sind Verfahren und Einrichtungen zur Fertigung von Messgrößenumformern bekannt.

Aus der EP 0 292 426 A2 ist eine Einrichtung zum Ermitteln der Lage eines rotationssymmetrischen Körpers bezüglich einer Referenzachse bekannt.

Offenbarung der Erfindung

Die Erfindung geht aus von der Erkenntnis, dass für reale Sensoren durch Lagerspiel oder fertigungsbedingte Toleranzen bezüglich der relativen Lage von Statorelement und Rotorelement Fehler auftreten können, die z.B. so groß sind, dass eine Spezifikation bezüglich der Genauigkeit der gemessenen Drehwinkel nicht mehr erfüllt werden kann.

Es kann daher ein Bedarf bestehen, einen Drehwinkelsensor bereitzustellen, der auch bei radialen Abweichungen des Statorelements bzw. des Stators relativ zum Rotorelement bzw. Rotor von einer Ideallage, z.B. einer zentrierten Lage, die dabei auftretenden Veränderungen im Messsignal für die Winkelerfassung zu kompensieren.

Vorteile

Es ist daher Aufgabe der vorliegenden Erfindung, einen verbesserten Drehwinkelsensor bereitzustellen.

Diese Aufgabe wird durch den Drehwinkelsensor nach Anspruch 1 und das Statorelement sowie das Rotorelement gemäß den nebengeordneten Ansprüchen gelöst.

Weitere vorteilhafte Ausgestaltungen der vorliegenden Erfindung sind in den abhängigen Ansprüchen angegeben.

Ein entsprechender Drehwinkelsensor umfasst ein Statorelement, und ein bezüglich des Statorelements um eine Drehachse drehbar gelagertes Rotorelement, wobei der Drehwinkel durch eine induktive Kopplung zwischen dem Rotorelement und dem Statorelement erfassbar ist, wobei am Statorelement mindestens ein Kompensationselement angeordnet ist, wobei das mindestens eine Kompensationselement mindestens eine Kompensations-Sendespule zur Aussendung eines elektromagnetischen Kompensations-Wechselfeldes und mindestens eine Kompensations-Empfangsspule zum Empfangen elektromagnetischer Wechselfelder umfasst, wobei das Rotorelement mindestens einen ersten elektrisch leitenden Abschnitt aufweist, wobei der mindestens eine erste elektrisch leitende Abschnitt am Rotorelement derart angeordnet ist und derart mit der mindestens einen Kompensations-Sendespule und der mindestens einen Kompensations-Empfangsspule des Kompensationselements induktiv gekoppelt ist, dass bei Aussenden des elektromagnetischen Kompensations-Wechselfelds durch die mindestens eine Kompensations-Sendespule eine in der mindestens einen ersten Kompensations-Empfangsspule induzierte Kompensations-Wechselspannung überwiegend von einer relativen radialen Anordnung des Statorelements und des Rotorelements zueinander bezüglich der Drehachse abhängig ist.

Dabei versteht sich, dass die Kompensations-Wechselspannung auch vom Drehwinkel abhängen kann. Bevorzugt ist das Kompensationselement jedoch derart gestaltet, dass eine reine Drehbewegung in einer definierten Anordnung zwischen Rotorelement und Statorelement die Kompensations-Wechselspannung nicht oder nur geringfügig verändert. Erst eine radiale Verschiebung zwischen Statorelement und Rotorelement, z.B. eine exzentrische Anordnung durch Lagerspiel bezüglich der Drehachse, soll die Kompensations-Wechselspannung messbar ändern. Bevorzugt ändert sich die Kompensations-Wechselspannung in ihrer Größe bzw. Amplitude in Abhängigkeit und/oder proportional zur Abweichung von der definierten radialen Anordnung. Beispielsweise kann mit zunehmender Abweichung in radialer Richtung die Amplitude steigen. Es kann vorgesehen sein, dass die Kompensations-Wechselspannung nur auf eine Verschiebung entlang einer Richtung in einem kartesischen Achsensystem sensitiv ist. Dann kann das Vorsehen von zwei nicht kollinear zur Drehachse und zueinander angeordneter Kompensationselemente eine Sensitivität auch Verschiebungen in einer Ebene senkrecht zur Drehachse in alle Richtungen ermöglichen.

Unter einem "elektrisch leitenden" Abschnitt kann im Sinne dieser Anmeldung auch ein "elektrisch leitfähiger Abschnitt" verstanden werden. Es ist dabei zu verstehen, dass im Allgemeinen als Isolatoren bezeichnete oder verwendete Werkstoffe im Sinne dieser Anmeldung nicht als "elektrisch leitend" bzw. "elektrisch leitfähig" angesehen werden. Lediglich beispielsweise kann ein Metallblech elektrisch leitend bzw. elektrisch leitfähig sein.

Durch das Aussenden des elektromagnetischen Kompensations-Wechselfelds wird in der mindestens einen ersten Kompensations-Empfangsspule die Kompensations-Wechselspannung induziert. Dabei wird der erste elektrisch leitende Abschnitt des Rotorelements, auch als sogenanntes Target bezeichenbar, für die induktive Kopplung verwendet. Die induktive Kopplung hängt dabei von der relativen radialen Anordnung von Target und Kompensationselement ab. Das Target ist am Rotorelement angeordnet, das Kompensationselement ist am Statorelement angeordnet. Damit beeinflusst die relative radiale Anordnung von Rotorelement und Statorelement die induzierte Kompensations-Wechselspannung abhängig von der induktiven Kopplung zwischen dem Kompensationselement und dem Target. Durch Überwachung der induzierten Kompensations-Wechselspannung ist somit die relative radiale Anordnung von Rotorelement und Statorelement überwachbar. Je nach relativer Überdeckung der mindestens einen Kompensations-Empfangsspule durch den ersten elektrisch leitenden Abschnitt des Rotorelements bzw. durch das Target ändert sich die Amplitude der durch die Kompensations-Sendespule induzierten Spannung.

Vorteilhafterweise weist das Statorelement mindestens eine Winkelerfassungs-Sendespule zur Aussendung eines elektromagnetischen Winkelerfassungs-Wechselfeldes und mindestens eine Winkelerfassungs-Empfangsspule zum Erfassen elektromagnetischer Wechselfelder auf, wobei das Rotorelement mindestens einen zweiten elektrisch leitenden Abschnitt aufweist. Dabei kann z.B. der mindestens eine zweite elektrisch leitende Abschnitt bezüglich der Drehachse kreisringsektorförmig ausgebildet sein. Dabei ist der mindestens eine zweite elektrisch leitende Abschnitt mit der mindestens einen Winkelerfassungs-Empfangsspule induktiv derart gekoppelt, dass bei Aussenden des elektromagnetischen Winkelerfassungs-Wechselfeldes durch die mindestens eine Winkelerfassungs-Sendespule in der mindestens einen Winkelerfassungs-Empfangsspule mindestens eine Winkelerfassungs-Wechselspannung induziert wird, wobei der mindestens eine zweite elektrisch leitende Abschnitt am Rotorelement derart angeordnet ist, dass die in der mindestens einen Winkelerfassungs-Empfangsspule induzierte erste Wechselspannung von einem Drehwinkel zwischen dem Statorelement und dem Rotorelement abhängig ist. Besonders vorteilhaft ist die induzierte Winkelerfassungs-Wechselspannung überwiegend von einem Drehwinkel zwischen dem Statorelement und dem Rotorelement abhängig. Dies ergibt eine besonders kompakte Anordnung, da der für die Winkelerfassung relevante zweite Abschnitt und der für die Kompensation relevante erste Abschnitt in einem einzigen Target, z.B. im Rotorelement bzw. Rotor ausgebildet sein können.

Vorteilhafterweise liegt das wenigstens eine Kompensationselement oder die wenigstens eine Kompensations-Empfangsspule radial außerhalb der wenigstens einen Winkelerfassungs-Empfangsspule. Dadurch wird eine radiale Abweichung besonders zuverlässig erkennbar, denn die wechselseitige Beeinflussung von Winkelerfassungs-Spulen und Kompensations-Spulen wird dadurch minimiert.

Vorteilhafterweise ist die mindestens eine Kompensations-Sendespule zur Erzeugung des Kompensations-Wechselfeldes und die mindestens eine Winkelerfassungs-Sendespule zur Erzeugung des Winkelerfassungs-Wechselfeldes am Statorelement angeordnet. Dies ermöglicht eine vereinfachte Kabelführung bzw. Leiterbahnenführung zur Kontaktierung der Spulen.

Vorteilhafterweise ist die mindestens eine Winkelerfassungs-Sendespule radial außerhalb umlaufend um die mindestens eine Winkelerfassungs-Empfangsspule angeordnet. Dies ermöglicht eine besonders kompakte Bauform auf einer Leiterplatte. Besonders vorteilhaft kann das Statorelement somit auf einer einzigen Leiterplatte angeordnet sein.

Vorteilhafterweise ist die Wicklung der mindesten einen Kompensations-Empfangsspule bezüglich des mindestens einen ersten elektrisch leitenden Abschnitts radial zur Drehachse zumindest teilweise überlappend mit dem ersten elektrisch leitenden Abschnitt angeordnet. Dabei kann z.B. die radiale Ausdehnung des ersten elektrisch leitenden Abschnitts kleiner als die radiale Ausdehnung der wenigstens einen Kompensations-Empfangsspule sein. Dadurch wird eine Änderung der Kompensations-Wechselspannung oder ein aktueller Wert dieser induzierten Kompensations-Wechselspannung besonders gut detektierbar. Die Kompensations-Wechselspannung wird dabei vom elektromagnetischen Kompensations-Wechselfeld der mindestens einen Kompensations-Sendespule in der mindestens einen ersten Kompensations-Empfangsspule induziert, unter Kopplung des mindestens einen elektrisch leitenden ersten Abschnitts. Kleine Positionsänderungen des mindestens einen ersten elektrisch leitenden Abschnitts entlang der radialen Richtung können bei diesen geometrischen Verhältnissen besonders präzise erfasst werden. So wird auch eine kleine Abweichung der relativen radialen Anordnung des Statorelements und des Rotorelements zueinander bezüglich der Drehachse erkennbar. Beispielsweise können auf diese Weise Abweichungen von einer definierten Referenzposition, z.B. einer zentrierten Position zwischen Statorelement und Rotorelement bezüglich der Drehachse, besonders genau erfasst werden.

Vorteilhafterweise ist der mindestens eine erste elektrisch leitende Abschnitt ein um das Rotorelement in Umfangrichtung umlaufender elektrisch leitfähiger Kreisring. Dies ermöglicht die Erkennung von Abweichungen bereits mit nur einem einzigen Kompensationselement.

Vorteilhafterweise erstreckt sich der mindestens eine erste elektrisch leitende Abschnitt von der Drehachse radial. Dabei schließt sich der mindestens eine zweite elektrisch leitende Abschnitt an den mindestens einen ersten elektrisch leitenden Abschnitt radial, in Richtung Drehachse erstreckend, an. Dabei ist der mindestens eine zweite elektrisch leitende Abschnitt in radialer Richtung betrachtet zwischen der Drehachse und dem mindestens einen ersten elektrisch leitenden Abschnitt angeordnet. Dabei ist in radialer Richtung betrachtet zwischen dem mindestens einen zweiten elektrisch leitenden Abschnitt und dem mindestens einen ersten elektrisch leitenden Abschnitt ein Spalt oder Schlitz vorgesehen. Dieser kann kreisringsektorförmig sein und kann sich vorzugsweise in Umfangrichtung erstrecken. Die geometrische Linie, an der der Rand des mindestens einen ersten elektrisch leitenden Abschnitts und der Rand des mindestens einen zweiten elektrisch leitenden Abschnitts an einander zugewandten Seiten des jeweiligen Abschnitts begrenzt sind, bildet eine Grenze zwischen den Abschnitten. Durch den Spalt oder den Schlitz wird die Fläche, die der mindestens eine erste elektrisch leitende Abschnitt und der mindestens eine zweite elektrisch leitende Abschnitt bilden vorzugsweise an dieser Grenze unterbrochen. Dies ermöglicht ein Überlappen des mindestens einen ersten elektrisch leitenden Abschnitts mit der mindestens einen Kompensations-Empfangsspule, während der mindestens eine zweite elektrisch leitende Abschnitt noch von dieser beabstandet ist. Dadurch wird die Robustheit der Erkennung bezüglich parasitärer induktiver Kopplung durch den zweiten elektrischen Abschnitt erhöht.

Vorteilhafterweise beträgt die Ausdehnung des Spaltes oder des Schlitzes in radialer Richtung wenigstens 50% der Differenz aus einer radialen Ausdehnung der Kompensations-Empfangsspule und einer radialen Ausdehnung des mindestens einen ersten leitenden Abschnitts. Dadurch wird die Funktionalität verbessert. Im zentrierten Fall, d.h. wenn sowohl das Statorelement als auch das Rotorelement bezüglich der Drehachse zentriert sind, ist der mindestens eine erste elektrisch leitende Abschnitt z.B. mittig zwischen den Wicklungen der jeweiligen Kompensations-Empfangsspule. Bei maximaler Auslenkung nach radial innen ist der mindestens eine erste elektrisch leitende Abschnitt vorzugsweise vollständig außerhalb der Wicklungen der Winkelerfassungs-Empfangsspule. Bei einer Auslenkung radial nach außen, bei der der mindestens eine erste leitende Abschnitt gerade eben noch innerhalb der Kompensations-Empfangsspule liegt, ist gleichzeitig sichergestellt, dass der mindestens eine zweite elektrisch leitende Abschnitt noch nicht oder nur minimal mit der Kompensations-Empfangsspule radial innen überlappt. Für diese Verschiebung nach radial außen ist also der mindestens eine zweite elektrisch leitende Abschnitt noch nicht überlappend mit der Kompensations-Empfangsspule angeordnet. Der mindestens eine erste elektrisch leitende Abschnitt hat radial vorzugsweise eine geringere Abmessung als die radiale Ausdehnung der mindestens einen Kompensations-Empfangsspule. Die Spaltbreite oder die Schlitzbreite wird vorzugsweise so groß bemessen, dass bei einem radialen Versatz der mindestens eine zweite elektrisch leitende Abschnitt nicht mit dem mindestens einen Kompensationselement überlappt, d.h. der Abstand ausreichend groß ist, sodass keine (starke) induktive Kopplung zwischen dem mindestens einen zweiten elektrisch leitenden Abschnitt und dem mindestens einen Kompensationselement entsteht. Auf diese Weise wird sichergestellt, dass das mindestens eine Kompensationselement nur bzw. überwiegend nur mit dem mindestens einen ersten elektrisch leitenden Abschnitt koppelt und die Kompensations-Messergebnisse nicht durch den mindestens einen zweiten elektrisch leitenden Abschnitt verfälscht werden, der für die Winkelerfassung gedacht ist.

Vorteilhafterweise bilden der mindestens eine zweite elektrisch leitende Abschnitt und der mindestens eine erste elektrisch leitende Abschnitt eine sich bezüglich der Drehachse radial aneinander anschließende, insbesondere kreisringsektorförmige, Fläche, wobei insbesondere der erste leitende Abschnitt den Spalt oder Schlitz umfasst. Dies ermöglichte eine einfache, insbesondere eine einstückige, Fertigung aus elektrisch leitendem Material. Dabei kann der Spalt oder Schlitz beispielsweise aus einem dünnen Blech ausgestanzt sein.

Vorteilhafterweise umfasst die mindestens eine Kompensations-Empfangsspule eine identische Anzahl von ersten Teilwicklungen und zweiten Teilwicklungen, die derart zueinander und bezüglich der Drehachse angeordnet sind, dass durch das elektromagnetische Kompensations-Wechselfeld in der ersten Teilwicklung ein erster Wechselspannungsanteil und in der zweiten Teilwicklung ein zweiter Wechselspannungsanteil mit umgekehrtem Vorzeichen induziert wird. Dabei kompensieren sich der erste Wechselspannungsanteil und der zweite Wechselspannungsanteil in einer vorgegebenen radialen Anordnung des mindestens einen ersten elektrisch leitenden Abschnitts bezüglich der Drehachse. Bei der oben genannten radial mittigen Anordnung überlagern sich die in den Teilwicklungen induzierten Wechselspannungen zu einer resultierenden Spannung von vorzugsweise 0 V (Null Volt). Abweichungen in die eine oder andere Richtung sind somit an den Amplituden der induzierten Spannung erkennbar. Dazu werden vorteilhafterweise die Teilwicklungen in einander entgegengesetzter Richtung gewickelt. Beispielsweise kann bei einer zentrierten Anordnung des Rotorelements und des Statorelements bezüglich der Drehachse bzw. bei einer der Referenzlage entsprechenden Positionierung diese mittige Anordnung des mindestens einen ersten elektrisch leitenden Abschnitts bezüglich der mindestens einen Kompensations-Empfangsspule eingestellt sein. Eine induzierte Kompensations-Wechselspannung kompensiert sich so in den beiden Teilwicklungen.

Vorteilhafterweise stimmen eine Anzahl von mindestens einen KompensationsElementen und mindestens einen ersten elektrisch leitenden Abschnitten überein. Vorteilhafterweise sind am Statorelement in einem vorgegebenen Kreissegment zwischen 0° und einem maximalen Winkel im Bereich von 170° bis 190°, vorzugsweise von 180°, zwei Kompensations-Empfangsspulen angeordnet, wobei am Rotorelement in einem vorgegebenen Kreissegment zwischen 0° und einem maximalen Winkel im Bereich von 170° bis 190°, vorzugsweise von 180°, zwei erste elektrisch leitende Abschnitte vorgesehen sind. Zusätzlich oder alternativ sind mindestens zwei Kompensations-Empfangsspulen und mindestens zwei erste elektrisch leitende Abschnitte in Umfangsrichtung des Statorelements beziehungsweise des Rotorelements um einen vorgegebenen Winkel, insbesondere zwischen 70 und 100°, vorzugsweise 90°, versetzt angeordnet.

Dies sind besonders günstige Anordnungen für einen Drehwinkelsensor, der als Drehwinkelsegmentsensor ausgeführt ist. Wird beispielsweise ein Kreissegment von 180° gewählt, kann die Baugröße des Drehwinkelsensors gegenüber einem Kreissegment von 360° halbiert werden. Wird zusätzlich beispielsweise ein Versatz von 90° gewählt, kann zum einen ein kartesisches Koordinatensystem mit Ursprung in der Drehachse so definiert werden, dass zwei Kompensations-Empfangsspulen in negativer x-Richtung und in positiver x-Richtung in gleichem Abstand zum Ursprung angeordnet sind. Zum anderen kann in positiver y-Richtung in gleichem Abstand zum Ursprung wie diese eine Kompensations-Empfangsspule angeordnet werden. Dadurch lassen sich radiale Abweichungen der relativen Anordnung des Rotorelements bezüglich des Statorelements als Linearkombination der Abweichungen entlang der x-Achse und der y-Achse messen. In diesem Fall können beispielsweise in einer Ruhelage des Rotorelements im Drehwinkelsensor drei erste elektrisch leitende Abschnitte um 90° versetzt angeordnet sein. Vorzugsweise werden zwei der elektrisch leitenden Abschnitte so angeordnet, dass sie in dieser Ruhelage in negativer x-Richtung und in positiver x-Richtung in gleichem Abstand zum Ursprung angeordnet sind, und einer der elektrisch leitenden ersten Abschnitte in positiver y-Richtung in gleichem Abstand wie diese zum Ursprung angeordnet ist. Dadurch kann in der Ruhelage eine Abweichung des Rotorelements von seiner zentrierten Lage in x-Richtung und y-Richtung erkannt werden. So wird mit vektorieller Messung direkt ein horizontaler sowie vertikaler Versatz bestimmt. Damit können bei 90° Versatz direkt x- und y-Toleranzen gemessen werden, ohne dass eine Umrechnung erfolgen muss.

Die Erfindung betrifft auch eine Statorelement und ein Rotorelement der beschriebenen Art für einen Drehwinkelsensor.

Kurzbeschreibung der Zeichnungen

Bevorzugte Ausführungsformen der vorliegenden Erfindung werden nachfolgend anhand der beigefügten Zeichnungen näher erläutert. Es zeigen:

Fig. 1            schematisch eine Ansicht eines Teils eines Drehwinkelsensors,

Fig. 2            schematisch eine Ansicht eines Teils eines Stators für Drehwinkelsensoren,

Fig. 3            schematisch einen Teil des Drehwinkelsensors gemäß einer ersten Ausführungsform,

Fig. 4            schematisch eine Detail-Ansicht eines Teils des Drehwinkelsensors gemäß der ersten Ausführungsform,

Fig. 5a, 5b, 5c   schematisch Ansichten verschiedener relativer Anordnungen von Teilen des Drehwinkelsensors gemäß Fig. 4,

Fig. 6            schematisch ein Rotorelement gemäß einer zweiten Ausführungsform.

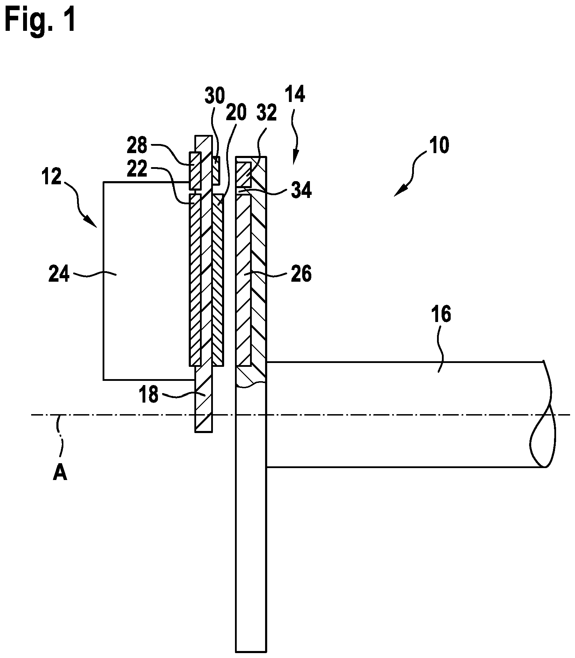

Fig. 1 zeigt schematisch einen Drehwinkelsensor 10, umfassend ein Statorelement 12 und ein bezüglich des Statorelements 12 um eine Drehachse A drehbar gelagertes Rotorelement 14.

Der Drehwinkel ist durch eine induktive Kopplung zwischen dem Rotorelement 14 und dem Statorelement 12 erfassbar. Details zur induktiven Kopplung und deren Verwendung zur Bestimmung des Drehwinkels sind beispielsweise in der EP 0 909 955 B1 beschrieben.

Dementsprechend weist das Statorelement 12 beispielsweise die in Fig. 1 dargestellte mindestens eine Winkelerfassungs-Sendespule 22 zur Aussendung eines elektromagnetischen Winkelerfassungs-Wechselfeldes und mindestens eine Winkelerfassungs-Empfangsspule 20 zum Erfassen elektromagnetischer Wechselfelder auf.

"Radial" oder "radiale Anordnung" bedeutet im Folgenden eine speichenförmige von der Drehachse A ausgehende Richtung oder Anordnung. "Umlaufend" oder "umlaufende Richtung" bedeutet im Folgenden eine kreisförmige Richtung im Wesentlichen in einer Ebene senkrecht zur Drehachse A. "Axiale Richtung" bedeutet im Folgenden eine Richtung entlang der Drehachse A.

Eine Sensor-Leiterplatte für den Drehwinkelsensor 10 umfasst beispielsweise mindestens eine umlaufend angeordnete Winkelerfassungs-Sendespule 22, die eine oder mehrere Wicklungen aufweist und vorzugsweise als Planarspule ausgeführt ist. Die Wicklungen können vorteilhaft in mehreren Ebenen einer mehrlagigen Leiterplatte realisiert sein, um ein ausreichend großes elektromagnetisches Wechselfeld erzeugen zu können. Die mindestens eine Winkelerfassungs-Sendespule 22 wird mit einer Wechselspannung beaufschlagt, die Amplituden im Bereich 0.5 V bis 10 V, bevorzugt 1.5 V, bei Frequenzen im Bereich einiger MHz, bevorzugt 5 MHz, aufweist.

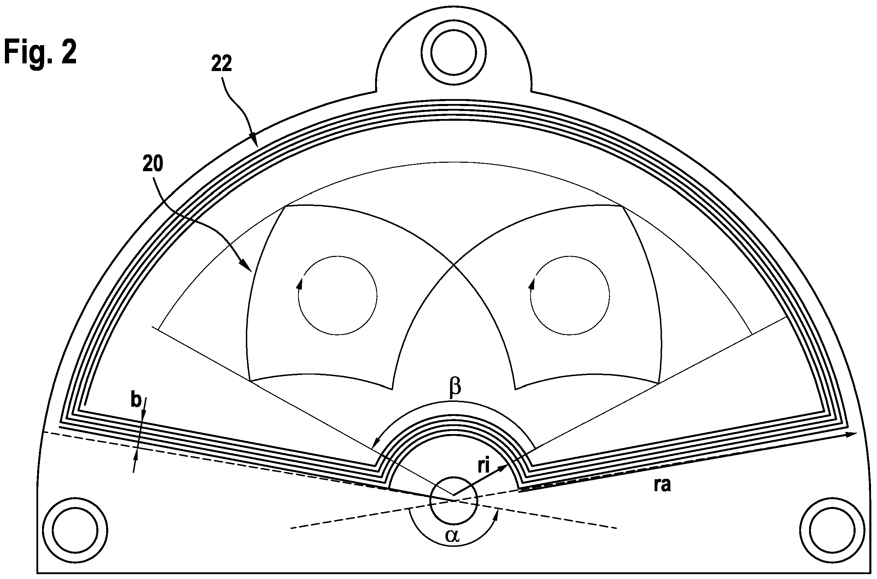

Fig. 2 zeigt ein Layout einer bekannten beispielhaften Sensor-Leiterplatte für einen Drehwinkelsensors, der als Drehwinkelsegmentsensor ausgeführt ist. Dies bedeutet, dass nicht 360° um die Drehachse A umlaufende Spulen vorgesehen sind, sondern die Spulen mit einem vorgegebenen Öffnungswinkel $\alpha$ passend zu einem vorgegebenen Messbereich β des Drehwinkelsensors angeordnet sind. Dementsprechend ist der Messbereich β auch geringer als 360°. Der Messbereich β kann prinzipiell jeden Winkel zwischen β = 0° und β = 360° abdecken, vorteilhafterweise nimmt der Messbereich β die Werte β = 360°/n ein. Dabei ist n eine natürliche Zahl größer 1. Im Beispiel ist der Messbereich β = 120°. Der Öffnungswinkel α der umlaufenden Winkelerfassungs-Sendespule 22 beträgt bevorzugt 5° bis 10° mehr als der Messbereich β, um den Einfluss der Feldinhomogenitäten im Bereich der radial verlaufenden Leiterbahnen der mindestens einen Winkelerfassungs-Sendespule 22 auf die mindestens eine Winkelerfassungs-Empfangsspulen 20 gering zu halten. Damit wird außerdem eine relativ homogene Durchflutung des Messbereichs β erreicht.

Die mindestens eine Winkelerfassungs-Sendespule 22 weist radial verlaufende Leiterbahnen auf, welche durch Kreisbögen miteinander verbunden sind. Die kreisbogenförmigen Leiterbahnen werden nach innen durch einen inneren Radius ri und nach außen durch einen äußeren Radius ra begrenzt. Der äußere Radius ra wird beispielsweise durch den verfügbaren Bauraum begrenzt und beträgt einige 10 mm und bevorzugt 25 mm. Der innere Radius ri ist so groß dimensioniert, dass eine Wellendurchführung ermöglicht wird, kann allerdings auch 0 mm betragen falls diese nicht benötigt wird. Um die Feldstärke zu vergrößern, kann die mindestens eine Winkelerfassungs-Sendespule 22 in mehreren Ebenen der Sensor-Leiterplatte ausgeführt sein.

Im Innenraum der mindestens einen Winkelerfassungs-Sendespule 22 verläuft beispielsweise mindestens eine Winkelerfassungs-Empfangsspule 20, die beispielsweise aus zwei Teilwicklungen gebildet ist, die jeweils bei einem Stromfluss in unterschiedlichen Richtungen (im Uhrzeigersinn bzw. gegen den Uhrzeigersinn) vom elektrischen Strom durchflossen werden. Die Teilwicklungen können in unterschiedlichen Ebenen der Leiterplatte ausgebildet sein, vor allem an den Kreuzungspunkten der Wicklungen.

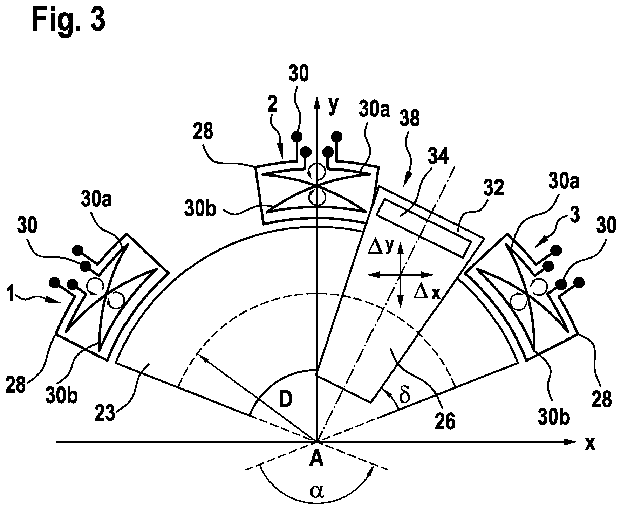

Fig. 3 zeigt eine Aufsicht auf eine erste Ausführungsform des Drehwinkelsensors 10. Der Drehwinkelsensor 10 weist eine Spulenanordnung 23 auf. Diese ist im Beispiel entsprechend der Anordnung der mindestens einen Winkelerfassungs-Sendespule 22 und der mindestens einen Winkelerfassungs-Empfangsspule 20, die in Figur 2 beschrieben ist, ausgeführt. Das Rotorelement 14 weist mindestens einen ersten elektrisch leitenden Abschnitt 32 und zudem mindestens einen zweiten elektrisch leitenden Abschnitt 26 auf.

Der mindestens eine zweite elektrisch leitende Abschnitt 26 ist vorzugsweise bezüglich der Drehachse A keisringsektorförmig ausgebildet. Andere Formen, wie z.B. eine Rechteckform oder eine Kreisform oder generell Vielecke sind ebenfalls möglich.

Der mindestens eine zweite elektrisch leitende Abschnitt 26 ist mit der mindestens einen Winkelerfassungs-Empfangsspule 20 induktiv derart gekoppelt, dass bei Aussenden des elektromagnetischen Winkelerfassungs-Wechselfeldes durch die mindestens eine Winkelerfassungs-Sendespule 22 in der mindestens einen Winkelerfassungs-Empfangsspule 20 mindestens eine Winkelerfassungs-Wechselspannung induziert wird. Der mindestens eine zweite elektrisch leitende Abschnitt 26 ist am Rotorelement 14 derart angeordnet, dass die in der mindestens einen Winkelerfassungs-Empfangsspule 20 induzierte Winkelerfassungs-Wechselspannung überwiegend von einem Drehwinkel zwischen dem Statorelement 12 und dem Rotorelement 14 abhängig ist. Einzelheiten zur Anordnung der mindestens einen Winkelerfassungs-Sendespule 22, der mindestens einen Winkelerfassungs-Empfangsspule 20, und des mindestens einen zweiten elektrisch leitenden Abschnitt 26 sowie Einzelheiten zur Bestimmung des Drehwinkels sind beispielsweise aus der EP 0 909 955 B1 bekannt.

Zudem ist am Statorelement mindestens ein erstes Kompensationselement 1, ein zweites Kompensationselement 2, und ein drittes Kompensationselement 3 angeordnet.

Jedes dieser Kompensationselemente 1, 2, 3 umfasst mindestens eine Kompensations-Sendespule 28 zur Aussendung eines elektromagnetischen Kompensations-Wechselfeldes und mindestens eine Kompensations-Empfangsspule 30 zum Empfangen elektromagnetischer Wechselfelder.

Der mindestens eine erste elektrisch leitende Abschnitt 32 ist am Rotorelement 14 derart angeordnet und derart mit der mindestens einen Kompensations-Sendespule 22 und der mindestens einen Kompensations-Empfangsspule 30 des jeweiligen Kompensationselements 1, 2, 3 induktiv gekoppelt, dass bei Aussenden des elektromagnetischen Kompensations-Wechselfelds durch die mindestens eine Kompensations-Sendespule 28 eine in der mindestens einen ersten Kompensations-Empfangsspule 30 induzierte Kompensations-Wechselspannung überwiegend von einer relativen radialen Anordnung des Statorelements 12 und des Rotorelements 14 zueinander bezüglich der Drehachse A abhängig ist. Die induktive Kopplung erfolgt beispielsweise wie für die Drehwinkelerfassung beschrieben. Der Koppelfaktor, das heißt ein Amplitudenverhältnis aus Spannung an der Kompensations-Empfangsspule 30 und Spannung an der Kompensations-Sendespule 22, bietet damit Information über eine relative Lage von jeweiligem ersten elektrisch leitenden Abschnitt 32 zu jeweiligem Kompensationselement 1, 2, 3, und damit insbesondere über die relative radiale Lage, von Statorelement 12 zu Rotorelement 14.

Die mindestens eine Kompensations-Sendespule 28 zur Erzeugung des Kompensations-Wechselfeldes und die mindestens eine Winkelerfassungs-Sendespule 22 zur Erzeugung des Winkelerfassungs-Wechselfeldes sind z.B. am Statorelement 12 wie in Figur 1 dargestellt angeordnet.

Alternativ dazu kann die Kompensations-Empfangsspule 30 innerhalb der Winkelerfassungs-Sendespule 22 am Statorelement 12 angeordnet sein. Auf diese Weise kann der Drehwinkelsensor 10 bzw. kann das Statorelement 12 noch kleiner gebaut werden bzw. einen geringeren Durchmesser aufweisen.

Das mindestens eine Kompensationselement 1, 2, 3 oder die mindestens eine Kompensations-Empfangsspule 30 liegt vorzugsweise parallel zu einer Ebene, die im Wesentlichen senkrecht zur Drehachse A verläuft. Vorzugsweise überlappen das mindestens eine Kompensationselemente 1, 2, 3 oder die mindestens eine Kompensations-Empfangsspule 30 flächenmäßig nicht mit der mindestens einen Winkelerfassungs-Empfangsspule 20, in einer Projektion auf die Ebene senkrecht zur Drehachse A betrachtet. Vorzugsweise liegt das mindestens eine Kompensationselement 1, 2, 3 oder die mindestens eine Kompensations-Empfangsspule 30 dabei radial außerhalb der mindesten einen Winkelerfassungs-Empfangsspule 30, d.h. von der Drehachse A gesehen weiter von dieser entfernt.

Die Wicklung der mindesten einen Kompensations-Empfangsspule 30 kann bezüglich des mindestens einen ersten elektrisch leitenden Abschnitts 32 radial zur Drehachse A in zentrierter Lage von Rotorelement 14 und Statorelement 12 zumindest teilweise überlappend angeordnet sein, wobei z.B. die radiale Ausdehnung des mindestens einen ersten elektrisch leitenden Abschnitts 32 kleiner als die radiale Ausdehnung der mindestens einen Kompensations-Empfangsspule 30 ist.

Gemäß der ersten Ausführungsform ist der mindestens eine erste elektrisch leitende Abschnitt 32 im Wesentlichen kreisringsektorförmig ausgebildet. Der mindestens eine erste elektrisch leitende Abschnitt 32 erstreckt sich gemäß der ersten Ausführungsform von der Drehachse A radial auswärts. Statt einer Kreisringsektorform kann auch eine andere Form, beispielswiese eine Rechteckform oder eine Kreisform, verwendet werden.

Der mindestens eine zweite elektrisch leitende Abschnitt 26 schließt sich an den mindestens einen ersten elektrisch leitenden Abschnitt 32 radial gesehen an, und erstreckt sich in Richtung Drehachse A. Der mindestens eine zweite elektrisch leitende Abschnitt 26 ist in radialer Richtung betrachtet zwischen der Drehachse A und dem mindestens einen ersten elektrisch leitenden Abschnitt 32 angeordnet. In radialer Richtung betrachtet ist zwischen dem mindestens einen zweiten elektrisch leitenden Abschnitt 26 und dem mindestens einen ersten elektrisch leitenden Abschnitt 32 ein, vorzugsweise kreisringsektorförmiger, Spalt 34 oder Schlitz 34 vorgesehen, der sich vorzugsweise in Umfangrichtung erstreckt. Der Spalt 34 oder der Schlitz 34 kann auch Rechteckform oder eine andere Form haben.

Vorzugsweise bilden der mindestens eine zweite elektrisch leitende Abschnitt 26 und der mindestens eine erste elektrisch leitende Abschnitt 32 eine sich bezüglich der Drehachse A radial aneinander anschließende, insbesondere kreisringsektorförmige, Fläche 38, wobei insbesondere der mindestens eine erste elektrisch leitende Abschnitt 32 den Spalt 34 oder den Schlitz 34 umfasst. Die Fläche 38 kann durch eine andere Form gegeben sein, beispielsweise durch eine Rechteckform oder eine Kreisform.

Die Spulenanordnung 23 mit der Winkelerfassungs-Sendespule 22 ist schematisch in Fig. 3 dargestellt. Die Winkelerfassungs-Sendespule 22 ist in einem Kreisbogensegment von $\delta = 20°$ bis $\delta = 160°$ bezüglich der x-Achse gegen den Uhrzeigersinn angeordnet. Deren mittlere radiale Ausdehnung D ist gestrichelt dargestellt und nimmt Werte zwischen wenigen zehn mm und einigen hundert mm an, beispielsweise zwischen 10 mm und 200 mm. Der Öffnungswinkel der Anordnung ist $\alpha = 140°$. Andere Winkel sind ebenfalls möglich.

Fig. 3 zeigt eine Aufsicht auf eine Anordnung aus Statorelement 12 und Rotorelement 14. Am Statorelement 12 sind 3 Kompensationselemente 1, 2, 3 angeordnet sowie die Spulenanordnung 23. Die Spulenanordnung 23 kann dabei z.B. wie in Fig. 2 ausgebildet sein. Das Rotorelement 12 ist rein exemplarisch zu Zwecken der besseren Übersichtlichkeit mit lediglich einem einzigen trapezförmigen Rotorabschnitt dargestellt, der aus dem ersten leitenden Abschnitt 32, dem Spalt 34 und dem zweiten leitenden Abschnitt 26 gebildet ist, Es versteht sich, dass das Rotorelement auch mehrere z.B. identische Rotorabschnitte 32, 34, 26 aufweisen kann. Beispielsweise sind ebenso viele Rotorabschnitte 32, 34, 26 vorgesehen wie Kompensationselemente 1, 2, 3. Es können aber auch weniger oder mehr Rotorabschnitte 32, 34, 26 vorgesehen sein als Kompensationselemente 1, 2, 3. Beispielsweise sind zwei, drei oder vier Rotorabschnitte 32, 34, 26 vorgesehen. Die Rotorabschnitte 32, 34, 26 können auch eine kreissektorförmige Gestalt aufweisen oder eine kreisringsektorförmige Gestalt.

Die dargestellte Anordnung mit dem ersten Kompensationselement 1, dem zweiten Kompensationselement 2 und dem dritten Kompensationselement 3 sind gebildet in einem Kreisbogensegment von $\delta = 20°$ bis $\delta = 160°$. Die einzelnen Kompensationselemente 1, 2, 3 erstrecken sich z.B. wie in Figur 3 in einem ersten Kreisbogensegment von $\delta = 25°$ bis $\delta = 50°$, in einem zweiten Kreisbogensegment von $\delta = 77,5°$ bis $\delta = 102,5°$ und in einem dritten Kreisbogen-segment von $\delta = 130°$ bis $\delta = 155°$. Das erste Kompensationselement 1, das zweite Kompensationselement 2 und das dritte Kompensationselement 3 haben dabei radial gesehen einen größeren Abstand zur Drehachse A als der äußere Radius ra der Spulenanordnung 23.

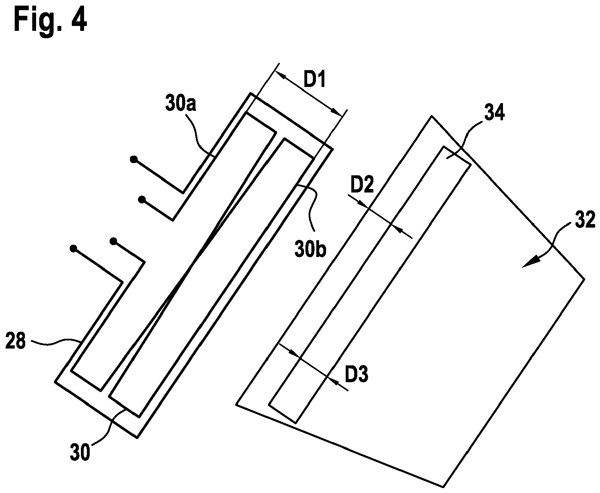

Fig. 4 stellt schematisch eine Ansicht eines Ausschnitts des Drehwinkelsensors 10 gemäß der ersten Ausführungsform dar. Die mindestens eine Kompensations-Empfangsspule 30 weist eine erste radiale Ausdehnung D1 auf. Der mindestens eine erste elektrisch leitende Abschnitt 32 weist eine zweite radiale Ausdehnung D2 auf. Dabei wird der mindestens eine erste elektrisch leitende Abschnitt 32 nach radial innen betrachtet durch den Spalt 34 oder den Schlitz 34 begrenzt. Der Spalt 34 oder der Schlitz 34 weist eine dritte radiale Ausdehnung D3 auf.

Die dritte radiale Ausdehnung D3 des Spaltes 34 oder des Schlitzes 34 in radialer Richtung beträgt vorzugsweise wenigstens 50% der Differenz aus der ersten radialen Ausdehnung D1 der mindestens einen Kompensations-Empfangsspule 30 und einer zweiten radialen Ausdehnung D2 des mindestens einen ersten elektrisch leitenden Abschnitts 32.

Anstelle von Spalt 34 oder Schlitz 34 oder kreisringförmigem mindestens einen ersten elektrisch leitfähigem Abschnitt 32 kann eine andere zusätzliche Struktur vorgesehen sein, die vorzugsweise ausschließlich der Messung der Toleranzen dient.

Vorzugsweise ist im zentrierten Fall, d.h. wenn Rotorelement 14 und Statorelement 12 zentriert zur Drehachse A, sind und der mindestens eine erste elektrisch leitende Abschnitt 32 sich somit in der Sollposition befindet, der mindestens eine erste elektrisch leitende Abschnitt 32 mittig zwischen gegenläufigen Wicklungen 30a, 30b oder Teil-Wicklungen 30a, 30b der mindestens einen Kompensations-Empfangsspule 30 angeordnet. Im Beispiel hat jede Wicklung 30a, 30b oder Teil-Wicklung 30a, 30b eine radiale Breite oder radiale Ausdehnung von 0,5xD1, d.h. eine halbe erste radiale Ausdehnung D1. Bei maximaler Auslenkung nach radial außen befindet sich der mindestens eine erste Abschnitt 32 gerade noch innerhalb der radial äußeren Wicklung 30a oder Teilwicklung 30a. Dies ist nach Verschiebung um 0,5x (D1-D2), also um die halbe Differenz aus der ersten radialen Ausdehnung der mindestens einen Kompensations-Empfangsspule 30 und der zweiten radialen Ausdehnung D2 des mindestens einen ersten leitenden Abschnitts 32, der Fall. Für diese Verschiebung liegt der mindestens eine zweite leitende Abschnitt 26 vorzugsweise nicht über der mindestens einen Kompensations-Empfangsspule 30 bzw. überlappt nicht mit der radial inneren Wicklung 30b oder Teilwicklung 30b der mindestens einen Kompensations-Empfangsspule 30. Dazu wird die Spaltbreite oder die Schlitzbreite des Spaltes 34 oder des Schlitzes 34 wie oben ausgeführt gewählt.

Der mindestens eine erste elektrisch leitende Abschnitt 32 ist dabei vorzugsweise wie in Fig. 4 dargestellt weniger breit, weist also eine geringere zweite radiale Ausdehnung D2 auf, als die mindestens eine Kompensations-Empfangsspule 30, die eine erste radiale Ausdehnung D1 aufweist. Es gilt also vorzugsweise D2 < D1. Dies verbessert die Sensitivität zur Erkennung von Toleranzen.

Lagerspiel oder fertigungsbedingt auftretenden Toleranzen ermöglichen eine relative Verschiebung des Statorelements 12 und des Rotorelements 14 radial zur Drehachse A. Der damit verbundenen Messfehler bei der Bestimmung des Drehwinkels wird anhand der Lage dieser im kartesischen Koordinatensystem aus Fig. 3 beschrieben. Dabei stellt die Drehachse A die z-Achse dar.

Die Anordnung der mindestens einen Kompensations-Sendespule 28 und der mindestens einen Kompensations-Empfangsspule 30 werden im Beispiel durch ein Kreisbogensegment begrenzt. Dieses hat, wie in Fig. 3 dargestellt, einen Öffnungswinkel $\alpha = 140°$ beginnend bei der Winkelposition $\delta = 20°$, der dem Öffnungswinkel $\alpha$ der umlaufenden Winkelerfassungs-Sendespule 22 der Spulenanordnung 23 entspricht. Der mindestens eine erste elektrisch leitenden Abschnitt 32 und der mindestens eine zweite elektrisch leitende Abschnitt 26 befinden sich wie beschrieben in der Winkelposition $\delta$ bezogen auf die x-Achse und bezogen auf eine Drehung entgegen des Uhrzeigersinns um die Drehachse A im Ursprung eines kartesischen Koordinatensystems. Potentiell auftretende kritische Toleranzen sind eine Verschiebung in x-Richtung $\Delta x$ sowie eine Verschiebung in y-Richtung $\Delta y$. Diese wirken je nach Winkelposition $\delta$ unterschiedlich stark auf den Messfehler des Drehwinkels.

Bei einer Winkelposition $\delta = 90°$ entspricht eine Verschiebung nur in x-Richtung direkt einer Verdrehung des zweiten elektrisch leitenden Abschnitts 26. Wird das Rotorelement 14 in dieser Position entlang der x-Achse verschoben, so erfasst der Drehwinkelsensor 10 diese Verschiebung mit der mindestens einen Winkelerfassungs-Empfangsspule 20 als Drehwinkel, da sich das Rotorelement 14 mit seinem induktiv koppelnden mindestens einen zweiten Abschnitt 26 bezüglich der mindestens einen Winkelerfassungs-Empfangsspulen 20 verschiebt. Dadurch ändert sich das Wechselspannungssignal. Der Drehwinkelsensor 10 ordnet dieser Veränderung dann eine Änderung des Drehwinkels zu, ohne dass tatsächlich eine Drehung des Rotorelements 14 bezüglich des Statorelements 12 stattfand. In dieser Position des Rotorelements 14 ergibt sich ein maximal zu erwartender Einfluss auf den Winkelfehler. Dieser kann durch die Relation

$$\Delta \delta x,max = 360° \cdot \Delta x \pi \cdot D$$

approximiert werden.

Der Einfluss einer auftretenden y-Toleranz $\Delta y$ auf den Messfehler ist an dieser Stelle minimal und zu vernachlässigen, da sich am Überdeckungsgrad der mindestens einen Winkelerfassungs-Empfangsspule 20 durch das Rotorelement 14 nichts oder nicht viel ändert.

Die entgegengesetzte Situation tritt auf, wenn der mindestens eine erste elektrisch leitende Abschnitt 26 an der radial verlaufenden Begrenzung der mindestens einen Winkelerfassungs-Empfangsspule 20 liegt. Dies wäre bei einem Drehwinkel $\delta$ von ca. 0° bis 10° des Rotorelements 14 der Fall. Hier ist der Messfehler deutlich stärker von der y-Toleranz abhängig und nur minimal von der x-Toleranz. Denn in dieser Lage würde selbst bei einer geringen Verschiebung in y-Richtung das Rotorelement 14 eine starke Änderung im Überdeckungsgrad mit der mindestens einen Winkelerfassungs-Empfangsspule 20 bewirken. Der Drehwinkelsensor 10 oder die mit diesem gekoppelte Auswerteelektronik würde diese Änderung der Überdeckung in Form einer geänderten induzierten Winkelerfassungs-Wechselspannung erfassen und dementsprechend einen veränderten Drehwinkel ausgeben - obwohl lediglich eine Verschiebung in y-Richtung zwischen Rotorelement 14 und Statorelement 12 vorliegt.

Für den Winkelfehler gilt hier näherungsweise

$$\Delta \delta y,max = \cos\delta \cdot \Delta \delta x,max = \cos\delta \cdot 360° \cdot \Delta x \pi \cdot D$$

Die bei realen Sensoren auftretenden Fehler durch x- und y-Toleranzen werden beispielsweise erkennbar und vorzugsweise vermieden durch eine Anordnung von mindesten einem der beschriebenen Kompensationselemente 1, 2, 3. Vorzugsweise stimmen eine Anzahl von Kompensationselementen 1, 2, 3 und ersten elektrisch leitenden Abschnitten 32 überein.

Vorzugsweise sind am Statorelement 12 in einem vorgegebenen Kreissegment zwischen 0° und einem maximalen Winkel im Bereich von 170° bis 190°, vorzugsweise von 180°, mindestens zwei Kompensations-Empfangsspulen 30 angeordnet, wobei am Rotorelement 14 in einem vorgegebenen Kreissegment zwischen 0° und einem maximalen Winkel im Bereich von 170° bis 190°, vorzugsweise von 180°, mindestens zwei erste elektrisch leitende Abschnitte 32 vorgesehen sind. Alternativ oder zusätzlich sind die mindestens zwei Kompensations-Empfangsspulen 30 und die mindestens zwei ersten elektrisch leitenden Abschnitte 32 in Umfangsrichtung des Statorelements 12 beziehungsweise des Rotorelements 14 um einen vorgegebenen Winkel, insbesondere zwischen 70 und 100°, vorzugsweise 90°, versetzt angeordnet.

In der ersten Ausführungsform umfasst die mindestens eine Kompensations-Empfangsspule 30 vorzugsweise eine identische Anzahl von ersten Teilwicklungen 30a und zweiten Teilwicklungen 30b, die derart zueinander und bezüglich der Drehachse A angeordnet sind, dass durch das elektromagnetische Kompensations-Wechselfeld in der ersten Wicklung 30a oder der ersten Teilwicklung 30a ein erster Wechselspannungsanteil und in der zweiten Wicklung 30b oder der zweiten Teilwicklung 30b ein zweiter Wechselspannungsanteil mit umgekehrtem Vorzeichen induziert wird, wobei sich erster Wechselspannungsanteil und zweiter Wechselspannungsanteil in einer vorgegebenen radialen Anordnung des mindestens einen ersten elektrisch leitenden Abschnitts 32 bezüglich der Drehachse A kompensieren.

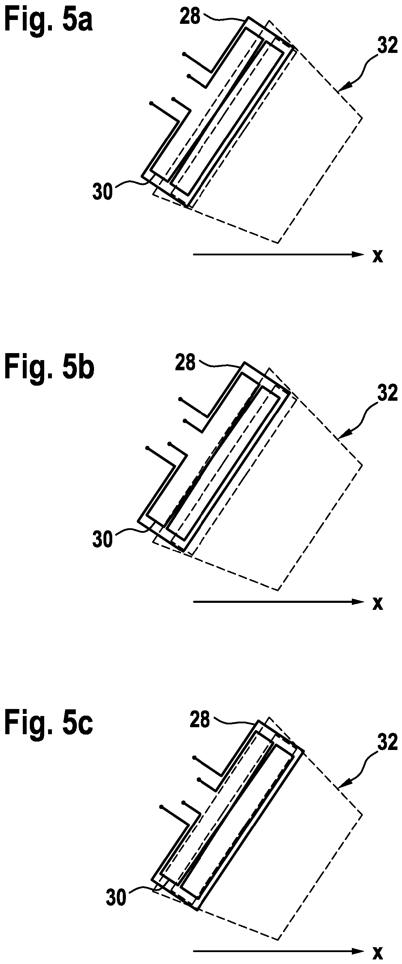

Fig. 5a, 5b und 5c stellen schematisch Ansichten der relativen Anordnung von Teilen des Drehwinkelsensors 10 gemäß der ersten Ausführungsform dar. Diese ergeben sich durch entsprechende relative Lagen von Statorelement 12 und Rotorelement 14 in x-Richtung zueinander. In der Anordnung gemäß Fig. 5a liegt der mindestens eine erste elektrisch leitende Abschnitt 32 symmetrisch zum Übergangsbereich der ersten Teilwicklungen 30a und zweiten Teilwicklungen 30b. Dadurch kompensieren sich die beiden Wechselspannungsanteile und der Koppelfaktor ist Null.

Dies bedeutet, dass der mindestens eine erste elektrisch leitende Abschnitt 32 sich in der Sollposition befindet, also kein lateraler oder vertikaler Versatz des mindestens einen zweiten elektrisch leitende Abschnitt 26 bezogen auf die Drehachse A vorliegt.

Verschiebt sich nun der mindestens eine erste elektrisch leitende Abschnitt 32 beispielsweise in negative x-Richtung (Fig. 5b), so bedeckt der erste elektrisch leitende Abschnitt 32 zunehmend die zweite Teilwicklung 30b und eine induktive Kopplung in diesen Spulenteil wird unterdrückt. Es verbleibt eine induzierte Spannung in der ersten Teilwicklung 30a und der Koppelfaktor ist positiv.

Der entgegengesetzte Fall für eine Verschiebung des mindestens einen ersten elektrisch leitenden Abschnitts 32 in positiver x-Richtung zeigt die Fig. 5c. Ein negativer Koppelfaktor ergibt sich daher entsprechend.

Vorzugsweise werden mindestens zwei der Kompensation-Empfangsspulen 30 außerhalb des Winkelerfassungs-Empfangsspulenmessbereiches angeordnet. Besonders vorteilhaft können bei der Verwendung der mindestens zwei Kompensations-Empfangsspulen 30 wenigstens zwei dieser Kompensations-Empfangsspulen bezüglich der Drehachse A nicht kollinear angeordnet sein. Mit anderen Worten: wenigstens zwei der Mehrzahl von Kompensations-Empfangsspulen 30 liegen nicht auf einer Geraden, auf der auch die Drehachse A liegt. Dadurch kann über Messung der beiden Koppelfaktoren auf den x- und y-Versatz des zweiten elektrisch leitenden Bereichs 26 rückgerechnet werden. Damit ist zu jedem Zeitpunkt die Lage des zweiten elektrisch leitenden Bereichs 26 bekannt. Vorzugsweise wird ein falsches Winkelsignal entsprechend korrigiert.

Anstelle des beschriebenen Designs der mindestens einen Kompensations-Empfangsspulen 30, der ersten Wicklung 30a, der ersten Teilwicklungen 30a, der zweiten Wicklung 30b oder der zweiten Teilwicklungen 30b sind auch andere Formen möglich. Beispielsweise müssen die erste Wicklung 30a oder die erste Teilwicklungen 30a und zweite Wicklung 30b oder die zweite Teilwicklungen 30b in der Aufsicht keine rechteckförmigen Flächen aufspannen. Weiterhin kann die Wicklungsanzahl der mindestens einen Kompensations-Sendespule 28 oder der mindestens einen Kompensations-Empfangsspule 30 größer als eins sein. Zudem kann die mindestens eine Kompensations-Empfangsspule 30 näher an der Drehachse A als die mindestens einen Kompensations-Sendespule 28 der Spulenanordnung 23 angeordnet sein. Alternativ kann die mindestens eine Kompensations-Empfangsspule 30 weiter von der Drehachse A beabstandet sein als die mindestens einen Kompensations-Sendespule 28 angeordnet sein.

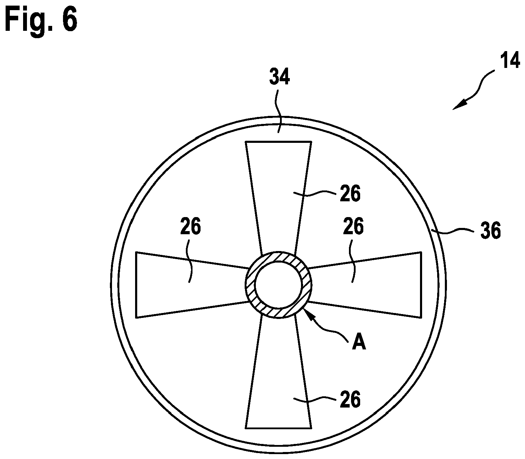

Fig. 6 zeigt schematisch einen Teil eines Drehwinkelsensors 10 gemäß einer zweiten Ausführungsform. Dieser umfasst das Rotorelement 14, das wie für die erste Ausführungsform beschrieben am Statorelement 12 angeordnet ist. Im Unterschied zur ersten Ausführungsform weist das Rotorelement 14 gemäß der zweiten Ausführungsform anstelle des mindestens einen ersten elektrisch leitenden Abschnitt 32 einen in Umfangrichtung umlaufenden elektrisch leitenden Kreisring 36 auf.

Der in Umfangrichtung umlaufende elektrisch leitende Kreisring 36 ist vom mindestens einen zweiten elektrisch leitenden Abschnitt 26 durch einen Spalt 34 oder einen Schlitz 34 beabstandet. In radialer Richtung betrachtet, also in Richtung auf die Drehachse A zu, ist der mindestens eine zweite elektrisch leitende Abschnitt 26 zwischen der Drehachse A und dem umlaufenden elektrisch leitfähigen Kreisring 36 angeordnet. In radialer Richtung betrachtet erstreckt sich der beispielsweise kreisringsektorförmige Spalt 34 oder Schlitz 34 vorzugsweise zwischen dem mindestens einen zweiten elektrisch leitenden Abschnitt 26 und dem umlaufenden elektrisch leitfähigen Kreisring 36 in Umfangrichtung. In Umfangrichtung gesehen sind z.B. vier zweite elektrisch leitende Abschnitte 26 vorgesehen, die sich entlang Speichen im Abstand von 90° zueinander radial von der Drehachse A zum umlaufenden elektrisch leitfähigen Kreisring 36 erstrecken. Es können auch mehr oder weniger zweite elektrisch leitende Abschnitte 26 vorgesehen sein.

Der mindestens eine zweite elektrisch leitende Abschnitt 26 des Rotorelements 14, die Spulenanordnung 23 und die Kompensationselemente 1, 2, 3 des Statorelements 12 sind beispielsweise wie in der ersten Ausführungsform beschrieben angeordnet. Der umlaufende elektrisch leitfähige Kreisring 36 ist beispielsweise radial in demselben Abstand von der Drehachse A angeordnet, wie der mindesten eine erste elektrisch leitende Abschnitt 32 der ersten Ausführungsform. Der Spalt 34 oder der Schlitz 34 hat beispielweise in beiden Ausführungsformen dieselbe Dimension.

Vorzugsweise ist die Spulenanordnung 23 im Unterschied zur ersten Ausführungsform um die Drehachse A umlaufend, d.h. der Öffnungswinkel ist $\alpha=360°$. Der Messbereich $\beta$ des Drehwinkelsensors 10 ist dann beispielsweise $\beta = 360°$. Beispielsweise werden dabei vier Kompensationselemente im Abstand von 90° entsprechend angeordnet.

**Patentansprüche**

1. Drehwinkelsensor (10), umfassend
ein Statorelement (12),
ein bezüglich des Statorelements (12) um eine Drehachse (A) drehbar gelagertes Rotorelement (14), wobei der Drehwinkel durch eine induktive Kopplung zwischen dem Rotorelement (14) und dem Statorelement (12) erfassbar ist,
**dadurch gekennzeichnet, dass**
am Statorelement (12) mindestens ein Kompensationselement (1, 2, 3) angeordnet ist, wobei das mindestens eine Kompensationselement (1, 2, 3) mindestens eine Kompensations-Sendespule (22, 28) zur Aussendung eines elektromagnetischen Kompensations-Wechselfeldes und mindestens eine Kompensations-Empfangsspule (30) zum Empfangen elektromagnetischer Wechselfelder umfasst,
wobei das Rotorelement (14) mindestens einen ersten elektrisch leitenden Abschnitt (32, 36) aufweist,
wobei der mindestens eine erste elektrisch leitende Abschnitt (32, 36) am Rotorelement (14) derart angeordnet ist und derart mit der mindestens einen Kompensations-Sendespule (22, 28) und der mindestens einen Kompensations-Empfangsspule (30) des Kompensationselements (1, 2, 3) induktiv gekoppelt ist, dass bei Aussenden des elektromagnetischen Kompensations-Wechselfelds durch die mindestens eine Kompensations-Sendespule (22, 28) eine in der mindestens einen ersten Kompensations-Empfangsspule (30) induzierte Kompensations-Wechselspannung überwiegend von einer relativen radialen Anordnung des Statorelements (12) und des Rotorelements (14) zueinander bezüglich der Drehachse (A) abhängig ist.

2. Drehwinkelsensor (10) nach Anspruch 1, **dadurch gekennzeichnet, dass** das Statorelement (12) mindestens eine Winkelerfassungs-Sendespule (22) zur Aussendung eines elektromagnetischen Winkelerfassungs-Wechselfeldes und mindestens eine Winkelerfassungs-Empfangsspule (20) zum Erfassen elektromagnetischer Wechselfelder aufweist,
wobei das Rotorelement (14) mindestens einen zweiten elektrisch leitenden Abschnitt (26) aufweist,
wobei insbesondere der mindestens eine zweite elektrisch leitende Abschnitt (26) bezüglich der Drehachse (A) keisringsektorförmig ausgebildet ist,
wobei der mindestens eine zweite elektrisch leitende Abschnitt (26) mit der mindestens einen Winkelerfassungs-Empfangsspule (20) induktiv derart gekoppelt ist, dass bei Aussenden des elektromagnetischen Winkelerfassungs-Wechselfeldes durch die mindestens eine Winkelerfassungs-Sendespule (22) in der mindestens einen Winkelerfassungs-Empfangsspule (20) mindestens eine erste Wechselspannung induziert wird,
wobei der mindestens eine zweite elektrisch leitende Abschnitt (26) am Rotorelement (14) derart angeordnet ist, dass die in der mindestens einen Winkelerfassungs-Empfangsspule (20) induzierte erste Wechselspannung, insbesondere überwiegend, von einem Drehwinkel zwischen dem Statorelement (12) und dem Rotorelement (14) abhängig ist.

3. Drehwinkelsensor (10) nach Anspruch 2, **dadurch gekennzeichnet, dass** das mindestens eine Kompensationselement (1, 2, 3) oder die mindestens eine Kompensations-Empfangsspule (30) radial außerhalb der mindestens einen Winkelerfassungs-Empfangsspule (20) liegt.

4. Drehwinkelsensor (10) nach einem der vorherigen Ansprüche, **dadurch gekennzeichnet, dass** die mindestens eine Kompensations-Sendespule (28) zur Erzeugung des Kompensations-Wechselfeldes und die mindestens eine Winkelerfassungs-Sendespule (22) zur Erzeugung des Winkelerfassungs-Wechselfeldes am Statorelement (12) angeordnet sind.

5. Drehwinkelsensor (10) nach einem der vorherigen Ansprüche, **dadurch gekennzeichnet, dass** die Wicklung der mindesten einen Kompensations-Empfangsspule (30) bezüglich des mindestens einen ersten elektrisch leitenden Abschnitts (32, 36) radial zur Drehachse (A) zumindest teilweise überlappend mit dem mindestens einen ersten elektrisch leitenden Abschnitt (32, 36) angeordnet ist, wobei insbesondere die radiale Ausdehnung des ersten elektrisch leitenden Abschnitts (32, 36) kleiner als die radiale Ausdehnung der mindestens einen Kompensations-Empfangsspule (30) ist.

6. Drehwinkelsensor (10) nach einem der vorherigen Ansprüche, **dadurch gekennzeichnet, dass** der mindestens eine erste elektrisch leitende Abschnitt (36) ein um das Rotorelement (14) in Umfangrichtung umlaufender elektrisch leitfähiger Kreisring (36) ist.

7. Drehwinkelsensor (10) nach einem der Ansprüche 1 bis 5, **dadurch gekennzeichnet, dass** sich der mindestens eine erste elektrisch leitende Abschnitt (32) von der Drehachse (A) radial erstreckt, wobei sich der mindestens eine zweite elektrisch leitende Abschnitt (26) an den ersten elektrisch leitenden Abschnitt (32) radial, in Richtung Drehachse (A) erstreckend, anschließt, wobei der zweite elektrisch leitende Abschnitt (26) in radialer Richtung betrachtet zwischen der Drehachse (A) und dem ersten elektrisch leitenden Abschnitt (32) angeordnet ist, wobei in radialer Richtung betrachtet zwischen dem zweiten elektrisch leitenden Abschnitt (26) und dem ersten elektrisch leitenden Abschnitt (32) ein, vorzugsweise kreisringsektorförmigen, Spalt (34) oder Schlitz (34) vorgesehen ist, der sich vorzugsweise in Umfangrichtung erstreckt.

8. Drehwinkelsensor (10) nach Anspruch 6 oder 7, **dadurch gekennzeichnet, dass** die Ausdehnung (D3) des Spaltes (34) oder des Schlitzes (34) in radialer Richtung wenigstens 50% der Differenz aus einer radialen Ausdehnung (D1) der Kompensations-Empfangsspule (30) und einer radialen Ausdehnung (D2) des ersten leitenden Abschnitts (32, 36) beträgt.

9. Drehwinkelsensor (10) nach Anspruch 7, **dadurch gekennzeichnet, dass** der mindestens eine zweite elektrisch leitende Abschnitt (26) und der mindestens eine erste elektrisch leitende Abschnitt (32) eine sich bezüglich der Drehachse (A) radial aneinander anschließende, insbesondere kreisringsektorförmige, Fläche (38) bilden, wobei insbesondere der erste leitende Abschnitt (32) den Spalt (34) oder den Schlitz (34) umfasst.

10. Drehwinkelsensor (10) nach einem der vorherigen Ansprüche, **dadurch gekennzeichnet, dass** die mindestens eine Kompensations-Empfangsspule (30) eine identische Anzahl von ersten Teilwicklungen (30a) und zweiten Teilwicklungen (30b) umfasst, die derart zueinander und bezüglich der Drehachse (A) angeordnet sind, dass durch das elektromagnetische Kompensations-Wechselfeld in der ersten Wicklung (30a) oder der ersten Teilwicklung (30a) ein erster Wechselspannungsanteil und in der zweiten Wicklung (30b) oder der zweiten Teilwicklung (30b) ein zweiter Wechselspannungsanteil mit umgekehrtem Vorzeichen induziert wird, wobei sich erster Wechselspannungsanteil und zweiter Wechselspannungsanteil in einer vorgegebenen radialen Anordnung des mindestens einen ersten elektrisch leitenden Abschnitts (32) bezüglich der Drehachse (A) kompensieren.

11. Drehwinkelsensor (10) nach einem der vorherigen Ansprüche, **dadurch gekennzeichnet, dass** eine Anzahl von mindestens einem Kompensationselement (1, 2, 3) und mindestens einem ersten elektrisch leitenden Abschnitten (32) übereinstimmen.

12. Drehwinkelsensor (10) nach Anspruch 10, **dadurch gekennzeichnet, dass** am Statorelement (12) in einem vorgegebenen Kreissegment zwischen 0° und einem maximalen Winkel im Bereich von 170° bis 190°, vorzugsweise von 180°, mindestens zwei Kompensations-Empfangsspulen (30) angeordnet sind, wobei am Rotorelement (14) in einem vorgegebenen Kreissegment zwischen 0° und einem maximalen Winkel im Bereich von 170° bis 190°, vorzugsweise von 180°, mindestens zwei erste elektrisch leitende Abschnitte (32) vorgesehen sind
und/oder

dass die mindestens zwei Kompensations-Empfangsspulen (30) und die mindestens zwei ersten elektrisch leitenden Abschnitte (32) in Umfangsrichtung des Statorelements (12) beziehungsweise des Rotorelements (14) um einen vorgegebenen Winkel, insbesondere zwischen 70 und 100°, vorzugsweise 90°, versetzt angeordnet sind.

**Claims**

1. Rotation angle sensor (10), comprising
a stator element (12),
a rotor element (14) mounted rotatably about an axis of rotation (A) with respect to the stator element (12), wherein the rotation angle can be detected by an inductive coupling between the rotor element (14) and the stator element (12), **characterized in that**
at least one compensation element (1, 2, 3) is arranged at the stator element (12), wherein the at least one compensation element (1, 2, 3) comprises at least one compensation transmitting coil (22, 28) for emitting an electromagnetic compensation alternating field and at least one compensation receiving coil (30) for receiving electromagnetic alternating fields,
wherein the rotor element (14) comprises at least one first electrically conducting section (32, 36), wherein the at least one first electrically conducting section (32, 36) is arranged at the rotor element (14) in such a way, and is inductively coupled with the at least one compensation transmitting coil (22, 28) and the at least one compensation receiving coil (30) of the compensation element (1, 2, 3) in such a way that when the electromagnetic compensation alternating field is emitted by the at least one compensation transmitting coil (22, 28) a compensation alternating voltage induced in the at least one first compensation receiving coil (30) depends predominantly on a relative radial arrangement of the stator element (12) and of the rotor element (14) to one another with respect to the axis of rotation (A).

2. Rotation angle sensor (10) according to Claim 1, **characterized in that** the stator element (12) comprises at least one angle detection transmitting coil (22) for emitting an electromagnetic angle detection alternating field, and at least one angle detection receiving coil (20) for detecting electromagnetic alternating fields,
wherein the rotor element (14) comprises at least one second electrically conducting section (26), wherein in particular the at least one second electrically conducting section (26) is designed in the form of a circular ring sector with respect to the axis of rotation (A),
wherein the at least one second electrically conducting section (26) is inductively coupled with the at least one angle detection receiving coil (20) in such a way that when the electromagnetic angle detection alternating field is emitted by the at least one angle detection transmitting coil (22) at least one first alternating voltage is induced in the at least one angle detection receiving coil (20),
wherein the at least one second electrically conducting section (26) is arranged at the rotor element (14) in such a way that the first alternating voltage induced in the at least one angle detection receiving coil (20) depends, in particular predominantly, on a rotation angle between the stator element (12) and the rotor element (14).

3. Rotation angle sensor (10) according to Claim 2, **characterized in that** the at least one compensation element (1, 2, 3) or the at least one compensation receiving coil (30) lies radially outside the at least one angle detection receiving coil (20).

4. Rotation angle sensor (10) according to one of the preceding claims, **characterized in that** the at least one compensation transmitting coil (28) for generating the compensation alternating field and the at least one angle detection transmitting coil (22) for generating the angle detection alternating field are arranged at the stator element (12).

5. Rotation angle sensor (10) according to one of the preceding claims, **characterized in that** the winding of the at least one compensation receiving coil (30) is arranged with respect to the at least one first electrically conducting section (32, 36) radially with respect to the axis of rotation (A) at least partially overlapping with the at least one first electrically conducting section (32, 36), wherein in particular the radial extent of the first electrically conducting section (32, 36) is smaller than the radial extent of the at least one compensation receiving coil (30).

6. Rotation angle sensor (10) according to one of the preceding claims, **characterized in that** the at least one first electrically conducting section (36) is an electrically conductive circular ring (36) surrounding the rotor element (14) in the circumferential direction.

7. Rotation angle sensor (10) according to one of Claims 1 to 5, **characterized in that** the at least one first electrically conducting section (32) extends radially from the axis of rotation (A), wherein the at least one second electrically conducting section (26) abuts the first electrically conducting section (32) radially, extending in the direction of the axis of rotation (A), wherein the second electrically conducting section (26) is arranged, viewed in the radial direction, between the axis of rotation (A) and the first electrically conducting section (32),
wherein, viewed in the radial direction, a gap (34) or slot (34), preferably with the form of a circular ring sector, extending preferably in the circumferential direction, is provided between the second electrically conducting section (26) and the first electrically conducting section (32).

8. Rotation angle sensor (10) according to Claim 6 or 7, **characterized in that** the extent (D3) of the gap (34) or slot (34) in the radial direction is at least 50% of the difference between a radial extent (D1) of the compensation receiving coil (30) and a radial extent (D2) of the first conducting section (32, 36).

9. Rotation angle sensor (10) according to Claim 7, **characterized in that** the at least one second electrically conducting section (26) and the at least one first electrically conducting section (32) form a surface (38), in particular with the form of a circular ring sector, abutting one another radially with respect to the axis of rotation (A), wherein in particular the first conducting section (32) comprises the gap (34) or the slot (34).

10. Rotation angle sensor (10) according to one of the preceding claims, **characterized in that** the at least one compensation receiving coil (30) comprises an identical number of first partial windings (30a) and second partial windings (30b) which are arranged with respect to one another and with respect to the axis of rotation (A) in such a way that a first alternating voltage component is induced in the first winding (30a) or the first partial winding (30a) by the electromagnetic compensation alternating field, and a second alternating voltage component with the opposite arithmetic sign is induced in the second winding (30b) or the second partial winding (30b), wherein in a predetermined radial arrangement of the at least one first electrically conducting section (32) with respect to the axis of rotation (A) the first alternating voltage component and the second alternating voltage component compensate one another.

11. Rotation angle sensor (10) according to one of the preceding claims, **characterized in that** a number of at least one compensation element (1, 2, 3) and at least one first electrically conducting section (32) are in accordance.

12. Rotation angle sensor (10) according to Claim 10, **characterized in that** at least two compensation receiving coils (30) are arranged at the stator element (12) in a predetermined circular segment between 0° and a maximum angle in the range from 170° to 190°, preferably 180°, wherein at least two first electrically conducting sections (32) are provided at the rotor element (14) in a predetermined circular segment between 0° and a maximum angle in the range of 170° to 190°, preferably 180°,
and/or
**in that** the at least two compensation receiving coils (30) and the at least two first electrically conducting sections (32) are arranged offset in the circumferential direction of the stator element (12) or of the rotor element (14) by a predetermined angle, in particular between 70 and 100°, preferably 90°.

**Revendications**

1. Capteur d'angle de rotation (10), comprenant un élément stator (12),
un élément rotor (14) monté à rotation autour d'un axe de rotation (A) par rapport à l'élément stator (12), l'angle de rotation pouvant être détecté par un couplage inductif entre l'élément rotor (14) et l'élément stator (12),
**caractérisé en ce qu'**au moins un élément de compensation (1, 2, 3) est disposé au niveau de l'élément stator (12), l'au moins un élément de compensation (1, 2, 3) comportant au moins une bobine d'émission de compensation (22, 28) destinée à émettre un champ alternatif de compensation électromagnétique et au moins une bobine de réception de compensation (30) destinée à recevoir des champs alternatifs électromagnétiques,
l'élément rotor (14) possédant au moins une première portion (32, 36) électriquement conductrice,
l'au moins une première portion (32, 36) électriquement conductrice étant disposée au niveau de l'élément rotor (14) et couplée inductivement à l'au moins une bobine d'émission de compensation (22, 28) et à l'au moins une bobine de réception de compensation (30) de l'élément de compensation (1, 2, 3) de telle sorte que lors de l'émission du champ alternatif de compensation électromagnétique par l'au moins une bobine d'émission de compensation (22, 28), une tension alternative de compensation induite dans l'au moins une première bobine de réception de compensation (30) est principalement dépendante d'un arrangement radial relatif de l'élément stator (12) et de l'élément rotor (14) l'un par rapport à l'autre en référence à l'axe de rotation (A).

2.  Capteur d'angle de rotation (10) selon la revendication 1, **caractérisé en ce que** l'élément stator (12) possède au moins une bobine d'émission de détection d'angle (22) destinée à émettre un champ alternatif de détection d'angle électromagnétique et au moins une bobine de réception de détection d'angle (20) destinée à détecter des champs alternatifs électromagnétiques, l'élément rotor (14) possédant au moins une deuxième portion (26) électriquement conductrice,
l'au moins une deuxième portion (26) électriquement conductrice étant notamment réalisée en forme de secteur d'anneau circulaire en référence à l'axe de rotation (A), l'au moins une deuxième portion (26) électriquement conductrice étant couplée inductivement avec l'au moins une bobine de réception de détection d'angle (20) de telle sorte que lors de l'émission du champ alternatif de détection d'angle électromagnétique par l'au moins une bobine d'émission de détection d'angle (22), au moins une première tension alternative est induite dans l'au moins une bobine de réception de détection d'angle (20),
l'au moins une deuxième portion (26) électriquement conductrice étant disposée au niveau de l'élément rotor (14) de telle sorte que la première tension alternative induite dans l'au moins une bobine de réception de détection d'angle (20) est dépendante, notamment principalement, d'un angle de rotation entre l'élément stator (12) et l'élément rotor (14).

3.  Capteur d'angle de rotation (10) selon la revendication 2, **caractérisé en ce que** l'au moins un élément de compensation (1, 2, 3) ou l'au moins une bobine de réception de compensation (30) se trouve radialement en-dehors de l'au moins une bobine de réception de détection d'angle (20).

4.  Capteur d'angle de rotation (10) selon l'une des revendications précédentes, **caractérisé en ce que** l'au moins une bobine d'émission de compensation (28) destinée à générer le champ alternatif de compensation et l'au moins une bobine d'émission de détection d'angle (22) destinée à générer le champ alternatif de détection d'angle sont disposées au niveau de l'élément stator (12).

5.  Capteur d'angle de rotation (10) selon l'une des revendications précédentes, **caractérisé en ce que** l'enroulement de l'au moins une bobine de réception de compensation (30) en référence à l'au moins une première portion (32, 36) électriquement conductrice est disposé radialement par rapport à l'axe de rotation (A) au moins partiellement en chevauchement avec l'au moins une première portion (32, 36) électriquement conductrice, l'expansion radiale de la première portion (32, 36) électriquement conductrice étant notamment plus petite que l'expansion radiale de l'au moins une bobine de réception de compensation (30).

6.  Capteur d'angle de rotation (10) selon l'une des revendications précédentes, **caractérisé en ce que** l'au moins une première portion (36) électriquement conductrice est un anneau circulaire (36) électriquement conducteur circulaire dans la direction périphérique autour de l'élément rotor (14).

7.  Capteur d'angle de rotation (10) selon l'une des revendications 1 à 5, **caractérisé en ce que** l'au moins une première portion (32) électriquement conductrice s'étend radialement depuis l'axe de rotation (A), l'au moins une deuxième portion (26) électriquement conductrice se raccordant radialement à la première portion (32) électriquement conductrice, en s'étendant dans la direction de l'axe de rotation (A), la deuxième portion (26) électriquement conductrice, vue dans la direction radiale, étant disposée entre l'axe de rotation (A) et la première portion (32) électriquement conductrice,
en observant dans la direction radiale, un entrefer (34) ou une fente (34), de préférence en forme de secteur d'anneau circulaire, qui s'étend de préférence dans la direction périphérique, se trouvant entre la deuxième portion (26) électriquement conductrice et la première portion (32) électriquement conductrice.

8.  Capteur d'angle de rotation (10) selon la revendication 6 ou 7, **caractérisé en ce que** l'expansion (D3) de l'entrefer (34) ou de la fente (34) dans la direction radiale est égale à au moins 50 % de la différence entre une expansion radiale (D1) de la bobine de réception de compensation (30) et une expansion radiale (D2) de la première portion (32, 36) conductrice.

9.  Capteur d'angle de rotation (10) selon la revendication 7, **caractérisé en ce que** l'au moins une deuxième portion (26) électriquement conductrice et l'au moins une première portion (32) électriquement conductrice forment une surface (38) se rattachant radialement l'une contre l'autre en référence à l'axe de rotation (A), notamment en forme de segment d'anneau circulaire, la première portion (32) conductrice comportant notamment l'entrefer (34) ou la fente (34).

10. Capteur d'angle de rotation (10) selon l'une des revendications précédentes, **caractérisé en ce que** l'au moins une bobine de réception de compensation (30) comporte un nombre identique de premiers enroulements partiels (30a) et de deuxièmes enroulements partiels (30b), lesquels sont disposés les uns par rapport aux autres et en référence à l'axe de rotation (A) de telle sorte qu'une première composante de tension alternative est induite dans le premier enroulement (30a) ou dans le premier enroulement partiel (30a) par le champ alternatif de compensation électromagnétique et une deuxième composante de tension alternative ayant un signe inverse est induite dans le deuxième enroulement (30b) ou le deuxième enroulement partiel (30b),
la première composante de tension alternative et la deuxième composante de tension alternative se compensant dans un arrangement radial prédéfini de l'au moins une première portion (32) électriquement conductrice en référence à l'axe de rotation (A).

11. Capteur d'angle de rotation (10) selon l'une des revendications précédentes, **caractérisé en ce qu'**un nombre d'au moins un élément de compensation (1, 2, 3) et d'au moins une première portion (32) électriquement conductrice coïncident.

12. Capteur d'angle de rotation (10) selon la revendication 10, **caractérisé en ce qu'**au moins deux bobines de réception de compensation (30) sont disposées au niveau de l'élément stator (12) dans un segment de cercle prédéfini entre 0° et un angle maximal dans la plage de 170° à 190°, de préférence de 180°, au moins deux premières portions (32) électriquement conductrices se trouvant au niveau de l'élément rotor (14) dans un segment de cercle prédéfini entre 0° et un angle maximal dans la plage de 170° à 190°, de préférence de 180° et/ou
**en ce que** les au moins deux bobines de réception de compensation (30) et les au moins deux premières portions (32) électriquement conductrices sont disposées décalées d'un angle prédéfini, notamment entre 70 et 100°, de préférence de 90°, dans la direction périphérique de l'élément stator (12) ou de l'élément rotor (14).

EP 3 479 071 B1

# Fig. 1

16

Fig. 2

EP 3 479 071 B1

## Fig. 3

# Fig. 4

# Fig. 5a

# Fig. 5b

# Fig. 5c

# Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0909955 B1
- DE 2622048
- EP 0292426 A2